# EUROPEAN PATENT SPECIFICATION

(11) **EP 2 682 285 B1**
(45) Date of publication and mention of the grant of the patent: **16.09.2015**
(21) Application number: 12751745.6
(22) Date of filing: 24.02.2012
(51) Int. Cl.: B60C 11/16

(54) **SPIKE FOR TIRE**
SPIKE FÜR EINEN REIFEN
CRAMPON POUR PNEU

(30) Priority: 01.03.2011 JP 2011044230
(43) Date of publication of application: 08.01.2014
(73) Proprietor: Kabushiki Kaisha Bridgestone, Chuo-ku, Tokyo 104-8340 (JP)
(72) Inventor: ITO Tomoaki, Kodaira-shi Tokyo 187-8531 (JP); OCHI Naoya, Kodaira-shi Tokyo 187-8531 (JP); WATANABE Yuki, Kodaira-shi Tokyo 187-8531 (JP)
(74) Representative: Oxley, Robin John George
(86) International application number: PCT/JP2012/054570
(87) International publication number: WO 2012/117962

(56) References cited:
- EP-A2- 1 798 069
- WO-A1-2009/068744
- WO-A1-2009/068744
- WO-A1-2010/098092
- JP-A- 56 146 407
- JP-A- S56 146 407
- JP-A- 2010 095 212
- JP-U- 58 129 206
- JP-U- S50 130 003
- JP-Y1- 46 036 802
- US-A1- 2008 060 733
- US-A1- 2008 060 733

## Description

### TECHNICAL FIELD

The present invention relates to a stud for tires that can realize enhanced clawing force (traction over ice) and weight reduction.

### BACKGROUND ART

Studs for tires, each having a pin shaped as a circular or rectangular cylinder, are known among studs for tires which have each a columnar body to be secured to the tread surface of a tire with one end thereof in the direction along the central axis thereof fitted into a bottomed hole formed in the tread surface and a pin protruding in the direction along the central axis thereof from the other end of the columnar body in the direction along the central axis thereof.

Attention is drawn to the disclosures of JP-S56-146407, US 2008/060733 and JP-S50-130003.

### PRIOR ART DOCUMENT

### Patent Document

Patent Document 1: Japanese Unexamined Patent Application Publication No. 2010-95212
Patent Document 2: EP1798069A2
Patent Document 3: WO2009/068744A1
Patent Document 4: RU2280564C1

### SUMMARY OF THE INVENTION

### Problem to be Solved by the Invention

In improving the ice traction performance of studded tires having studs secured to the tread surface, it is considered effective that the clawing force of the pins against the surface of ice is enhanced by increasing the projected edge component (equivalent to the maximum width of the pin) by enlarging the diameter of the pin of the tire stud. However, the weight of a stud for tires is regulated to be a specified weight or below (e. g., max. 1.1 grams). Therefore, there is a limit on enlarging the diameter of the pin if the weight regulation is to be satisfied.

The above-mentioned projected edge component of the pin can be made larger when the pin is shaped as a circular cylinder. It is therefore preferable that the pin is shaped as a circular cylinder to allow the enlargement of the projected edge component while limiting the weight of the pin.

However, small penetration force of the pin against the surface of ice can be a problem that arises when the pin is shaped as a circular cylinder, because of the circular boundary line between the circular end face and the peripheral surface of the pin without any corners (vertexes formed by three or more surfaces).

On the other hand, a problem that arises when the pin is shaped as a rectangular cylinder with a triangular, rectangular, or other cross section is the inability to enlarge the projected edge component while limiting the weight of the pin in contrast to when the pin is shaped as a circular cylinder.

The present invention provides a stud for tires that features not only an enhanced clawing force against the surface of ice because of a larger projected edge component and a larger penetration force of the pin against ice, but also a possibility of weight reduction. That is, the invention provides a stud for tires that can realize enhanced clawing force (improved ice traction performance) and weight reduction.

### Means for Solving the Problem

In one aspect, the present invention provides a stud for tires which includes a columnar body to be secured to a tread surface of a tire with its one end side in a direction along its central axis fitted into a bottomed hole formed in the tread surface of the tire and a pin protruding from an other end of the columnar body in the direction along its central axis . And the pin is shaped as an odd-shaped columnar body protruding from the other end face of the columnar body and having recessed portions formed by removing portions straddling the other end face of a cylindrical body, the cylindrical body protruding from the other end face of the columnar body, and a peripheral surface of the cylindrical body to extend in the direction along the central axis of the columnar body. Therefore, the stud can realize enhanced clawing force (traction over ice) and weight reduction.

In addition, the present invention provides a stud for tires in which the pin is provided with a plurality of recessed portions and shaped as an odd-shaped columnar body having a lesser recessed portion formed by removing a portion straddling the other end face and the peripheral surface of the cylindrical body between the recessed portions circumferentially adjacent to each other. And the lesser recessed portions are of smaller recess than the recessed portions. Thus, provision of lesser recessed portions allows further weight reduction of the pin. Also, the possibility of increasing the number of corners to be formed by the boundaries between the other end face of the pin and the two curved surfaces further contributes to an increase in penetration force against the surface of ice and weight reduction.

Optionally, there is provided a stud for tires having a boundary line between the other end face and the recessed portion of the pin formed in a curved line and a surface of the recessed portion formed in a curved surface. Therefore, the corner formed by the boundaries between the other end face of the pin, the curved surface which is the peripheral surface of the pin, and the curved surface which is the recessed surface of the recessed portion can be sharp, thereby raising local edge pressure and consequently the penetration force against the surface of ice.

Optionally, there is provided a stud for tires having columnar body recessed portions on the columnar body, which straddle the other end face and the peripheral surface of the columnar body. And the recessed portions and the columnar body recessed portions are so arranged that each boundary line between the other end face and the columnar body recessed portion of the columnar body and each corresponding boundary line between the other end face and the recessed portion of the pin intersect a straight line passing through the central axis of the columnar body. Thus the arrangement enables weight reduction of the columnar body. At the same time, the penetration force against the surface of ice will be enhanced by the synergistic effect of the corners of the columnar body formed by the columnar body recessed portions and the corners of the pin.

### BRIEF DESCRIPTION OF THE DRAWINGS

FIG. 1 is a perspective illustration showing a stud for tires (first embodiment).
FIG. 2 is a top view of a stud for tires (first embodiment).
FIG. 3A shows a cross-sectional relationship between a tire and a stud for tires. FIG. 3B shows a cross section of a stud for tires fitted in a studded tire (first embodiment).
FIG. 4A is a perspective illustration showing a stud for tires (second embodiment). FIG. 4B is a top view of a stud for tires (second embodiment).
FIG. 5A is a perspective illustration showing a stud for tires (third embodiment). FIG. 5B is a top view of a stud for tires (third embodiment).
FIG. 6A is a perspective illustration showing a stud for tires (fourth embodiment). FIG. 6B is a top view of a stud for tires (fourth embodiment).

### BEST MODE FOR CARRYING OUT THE INVENTION

### First Embodiment

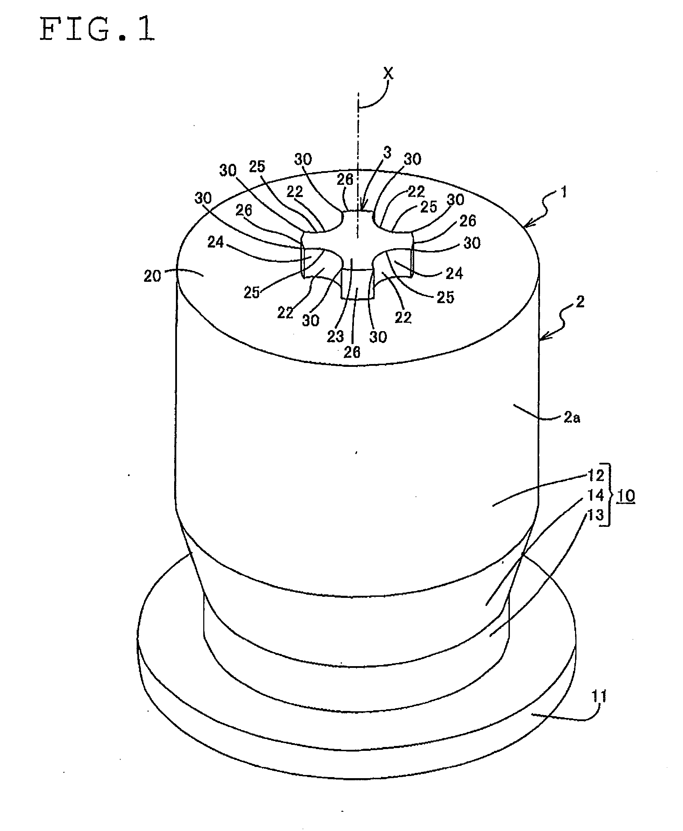

With reference to FIGS. 1 to 3, a description will be given of a structure of a stud for tires according to a first embodiment, which is not according to the present invention, but is useful for understanding the present invention.

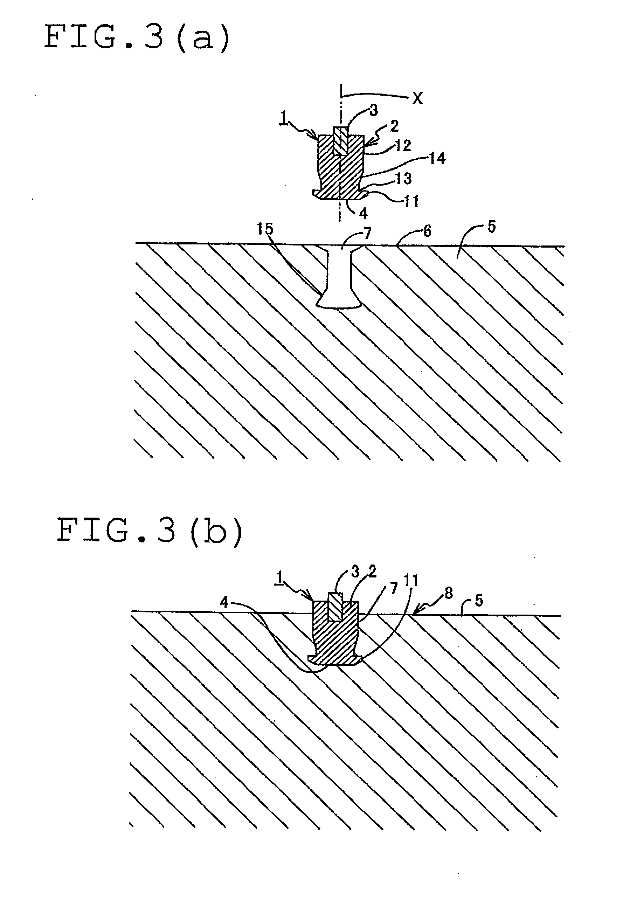

As shown in FIGS. 3A and 3B, the stud 1 for tires, which is, for instance, formed of metal, is used to form a studded tire with its one end face 4 side in the direction along the central axis X thereof fitted into a bottomed hole 7 formed in the tread surface 6 of the tire 5. And the stud 1 for tires includes a columnar body 2 and a pin 3.

The stud 1 for tires may be formed by combining the columnar body 2 and pin 3 which are each fabricated separately or may be formed with the columnar body 2 and pin 3 integrally structured together.

The columnar body 2, which is, for instance, called a shank or a body, is secured with its one end face 4 side in the direction along the central axis X fitted into the bottomed hole 7. The columnar body 2 is fitted into the bottomed hole 7 at least by the one end face 4 side thereof. That is, the columnar body 2 is secured with the one end face 4 side or the whole thereof fitted into the bottomed hole 7.

The columnar body 2 includes a columnar part 10 and a flange 11 provided at one end of the columnar part 10. The other end part of the columnar part 10 is formed by a larger-diameter cylindrical part 12, and the one end part thereof is formed by a smaller-diameter cylindrical part 13 which is of a diameter smaller than that of the larger-diameter cylindrical part 12. That is, the columnar part 10 is comprised of a columnar body with two diameters, with the one end edge of the circumferential surface of the larger-diameter cylindrical part 12 linked by a conical surface 14 to the other end edge of the circumferential surface of the smaller-diameter cylindrical part 13. The flange 11, which is shaped as a circular disk having a diameter larger than the larger-diameter cylindrical part 12, functions as the retainer of the stud 1 by engaging with an engagement cavity 15 formed at the bottom of the bottomed hole 7.

The bottomed holes 7 are each formed with a diameter smaller than that of the larger-diameter cylindrical part 12. And as the columnar bodies 2 are press-fitted into the bottomed holes 7 by a not-shown machine, a studded tire 8 is formed with the studs 1 fitted in the bottomed holes 7.

The pin 3, which is formed with a diameter smaller than that of the columnar body 2, is so disposed as to protrude from the other end face 20 of the columnar body 2 in a direction extending along the central axis X of the columnar body 2. The central axes of the pin 3, the larger-diameter cylindrical part 12, the smaller-diameter cylindrical part 13, and the flange 11 are all the same central axis.

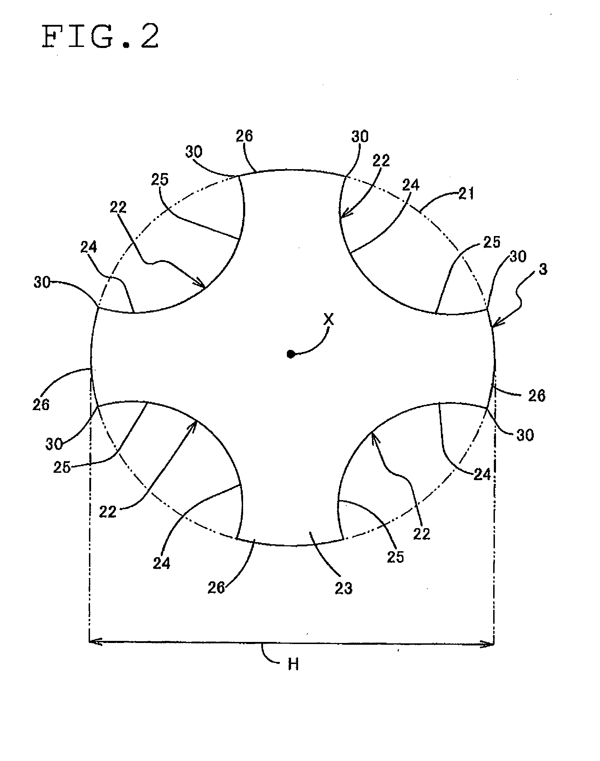

The pin 3 is formed from a cylindrical body 21 which protrudes from the other end face 20 of the columnar body 2 extending in the direction along the central axis X of the columnar body 2 (shown by an imaginary line (two-dot chain line) in FIG. 2).

In other words, the pin 3 is shaped as an odd-shaped columnar body having recessed portions 22 formed by removing portions straddling the other end face, which is the protruding end side of the cylindrical body 21, and the peripheral surface of the cylindrical body 21. That is to say, the recessed portions 22 are each a hollowed portion formed closer to the central axis X from the peripheral surface of the cylindrical body 21 as if the portion straddling the other end face of the cylindrical body 21 and the peripheral surface thereof is gouged.

Thus the boundary line 25 between the other end face 23 and the recessed surface 24 of the recessed portion 22 of the odd-shaped columnar body, which constitutes the pin 3, is formed in an arc-like curve bent closer to the central axis X from the peripheral surface of the cylindrical body 21, and the recessed surface 24 of the recessed portion 22 is formed in a curved surface.

The recessed portions 22 are formed as hollows (depressions) continuous from the other end face 23 of the odd-shaped columnar body forming the pin 3 to the other end face 20 of the columnar body 2. And the cross-sectional shape of the hollows (cross-sectional shape perpendicular to the central axis X of the pin 3) is the same at any point between the the other end face 23 of the pin 3 and the other end face 20 of the columnar body 2.

The pin 3 is provided, for instance, with four recessed portions 22, which are disposed on the peripheral surface of the cylindrical body 21 at equal angular intervals, that is, 90 degrees apart from each other, along the circumference of the cylindrical body 21 with the central axis X thereof as the center. In other words, the pin 3 is shaped such that each time the stud 1 is turned 90 degrees, starting from the initial position, with the central axis X of the pin 3 as the center, the other end face 23 of the pin 3 assumes the same cruciform shape.

Also, the pin 3 is so shaped that the boundary line 25 between the other end face 23 of the pin 3 and the recessed portion 22 is formed in a curved line approaching the central axis X from the peripheral surface of the cylindrical body 21 and that the recessed surface 24 of the recessed portion 22 is formed in a curved surface approaching the central axis X from the peripheral surface of the cylindrical body 21.

Accordingly, the pin 3 is shaped with corners 30, which are each formed by the boundaries between the flat surface of the other end face 23 of the pin 3, the curved surface of the peripheral surface 26 of the pin 3 (remaining peripheral surface of the cylindrical body 21), and the curved surface of the recessed surface 24 of the recessed portion 22. The corners 30 are sharper than those of a rectangular cylinder which are formed by the boundaries between three flat surfaces, and consequently the corners 30 raise local edge pressures, thereby enhancing the penetration force of the stud 1 against the surface of ice.

The stud 1 for tires according to the first embodiment includes a pin 3 formed from a cylindrical body 21 into an odd-shaped columnar body having recessed portions 22 formed by removing the portions of the cylindrical body 21 straddling the other end face, which is the projecting end side thereof, and the peripheral surface thereof. Compared with the studs having a pin of a circular or rectangular cylinder, the stud 1 for tires according to the first embodiment can not only realize weight reduction but also make the projected edge component H (equivalent to the diameter of the cylindrical body 21 of the pin (see FIG. 2)) larger. Moreover, having the corners 30, the stud 1 increases the penetration force against the surface of ice. Hence, the stud 1 for tires provides possibilities of not only reducing weight but also enhancing the clawing force (ice traction performance).

### Second Embodiment

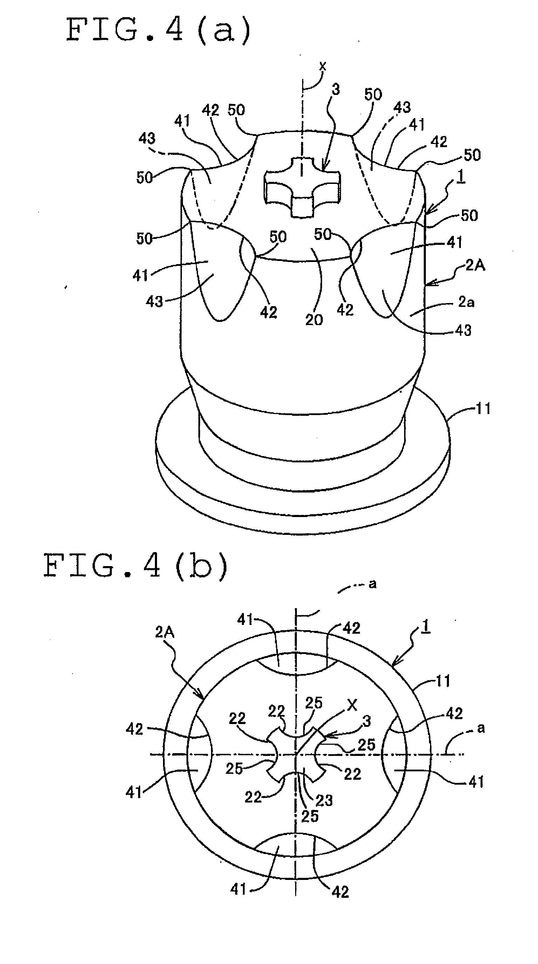

With reference to FIG. 4, a description will be given of a structure of a stud for tires according to a second embodiment, which is not according to the present invention, but is useful for understanding the present invention.

A stud 1 for tires may be one provided with a columnar body 2A as shown in FIG. 4.

That is, the stud 1 for tires may include, in addition to the general structure of the first embodiment, a columnar body 2A having columnar body recessed portions 41, each formed by removing a portion straddling the circular other end face of the larger-diameter cylindrical part 12, which is equal to the other end face 20 of the columnar body 2 of the first embodiment, and the cylindrical peripheral surface of the larger-diameter cylindrical part 12, which forms the peripheral surface 2a of the columnar body 2.

Each of the columnar body recessed portions 41 may be formed, for instance, by removing a portion near the circular circumferential edge of the other end face 20 of the columnar body 2 of the first embodiment which straddles the other end face 20 of the columnar body 2 and the peripheral surface 2a of the columnar body 2 such that the boundary line 42 between the other end face 20 and the columnar body recessed portion 41 delineates a curved line each end of which reaches the circular circumferential edge of the other end face 20 of the columnar body 2.

The recessed surface 43 of a columnar body recessed portion 41 is formed, for instance, in a curved surface.

Accordingly, the columnar body 2A is shaped with corners 50, which are each formed by the boundaries between the flat surface of the other end face 20 of the columnar body 2A, the curved surface of the peripheral surface 2a of the columnar body 2A, and the curved surface of the recessed surface 43 of the columnar body recessed portion 41. The corners 50 are sharper than those of a rectangular cylinder which are formed by the boundaries between three flat surfaces, and consequently the corners 50 raise local edge pressures, thereby enhancing the penetration force of the stud 1 against the surface of ice.

Also, four columnar body recessed portions 41 may be provided, for instance. And the four columnar body recessed portions 41 may be disposed at equal angular intervals, that is, 90 degrees apart from each other, along the circumference of the columnar body 2 with the central axis X thereof as the center.

And the recessed portions 22 of the pin 3 and the columnar body recessed portions 41 of the columnar body 2A may, for instance, be so disposed that each curved line of the boundary line 42 between the other end face 20 and the columnar body recessed portion 41 of the columnar body 2A and each corresponding curved line of the boundary line 25 between the other end face 23 and the recessed portion 22 of the pin 3 intersect a corresponding straight line a passing through the central axis X of the columnar body 2A. Then the penetration force of the stud against the surface of ice can be enhanced by the synergistic effect of the corners 30 of the pin 3 and the corners 50 of the columnar body 2. In particular, the arrangement may be such that the center of each curved line of the boundary line 42 between the other end face 20 and the columnar body recessed portion 41 of the columnar body 2A and the center of each corresponding curved line of the boundary line 25 between the other end face 23 and the recessed portion 22 of the pin 3 are located on a corresponding straight line a passing through the central axis X of the columnar body 2A. Then the penetration force of the stud against the surface of ice can be further enhanced by the synergistic effect of the corners 30 of the pin 3 and the corners 50 of the columnar body 2A. In this arrangement, therefore, the columnar body recessed portion 41 and the recessed portion 22 are recessed in the same direction toward the central axis X of the columnar body 2A.

The stud 1 for tires according to the second embodiment is provided with a pin 3 having the recessed portions 22 as described in the first embodiment and a columnar body 2A having the columnar body recessed portions 41. Therefore, the use of the columnar body 2A, which is lighter than the columnar body 2, can reduce the weight of the stud 1 for tires and also enhance the penetration force of the stud against the surface of ice by the synergistic effect of the corners 30 of the pin 3 and the corners 50 of the columnar body 2A. Thus, compared with the first embodiment, the second embodiment can provide a stud 1 for tires featuring further weight reduction and even more enhanced clawing force (traction over ice).

The results of an experiment are described below.

### Testing method:

- The ice braking performance was evaluated by measuring the time taken for deceleration from 30 km/h to 0 km/h.
- The ice traction performance was evaluated by measuring the time taken for acceleration from 0 km/h to 20 km/h.
Test vehicle: VW Golf6
Tire size: 205/55R16

### Test samples:

Sample 1 = A stud for tires with a pin having a cylindrical body whose diameter is 2 mm.

Sample 2 = A stud for tires with a pin having a cylindrical body whose diameter is 3 mm.

Sample 3 = A stud for tires with a pin having a columnar body with a cruciform cross section whose maximum diameter is 3 mm.

Sample 4 = A stud for tires of the first embodiment (with a pin 3 formed from a cylindrical body 21 whose diameter is 3 mm) .

Sample 5 = A stud for tires of the second embodiment (the columnar body 2 of the stud for tires of Sample 4 having columnar body recessed portions 41).

The results of the testing under the above-described conditions are as follows:
As for the ice braking performance, when the evaluation value of Sample 1 was set at 100, that of Sample 2 was 103, that of Sample 3 was 104, that of Sample 4 was 106, and that of Sample 5 was 107.

As for the ice traction performance, when the evaluation value of Sample 1 was set at 100, that of Sample 2 was 105, that of Sample 3 was 106, that of Sample 4 was 108, and that of Sample 5 was 109.

In other words, it has been proven that both the studs 1 for tires of the first embodiment and the second embodiment can not only realize weight reduction but also exhibit excellent performance in both braking and traction over ice.

In particular, it has been found that the stud 1 for tires of the first embodiment, which includes a pin 3 having corners 30 formed by boundaries between a flat surface, a curved surface, and another curved surface, is superior in both ice braking performance and ice traction performance to the stud for tires of Sample 3 having a pin with corners formed by boundaries between three flat surfaces. And it has also been found that the stud for tires of the second embodiment, which includes a columnar body having corners 50, shows further enhancement in both ice braking performance and ice traction performance over the stud for tires of the first embodiment.

### Third Embodiment

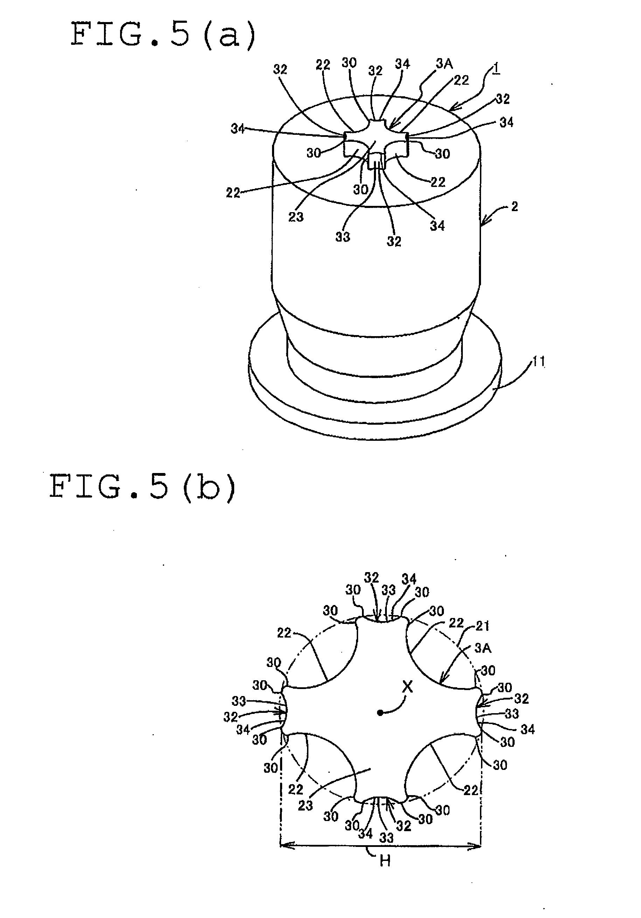

With reference to FIG. 5, a description will be given of a structure of a stud for tires according to a third embodiment, which is according to the present invention.

A stud 1 for tires may be one provided with a pin 3A as shown in FIG. 5.

That is, the stud 1 for tires may be provided with a pin 3A shaped as an odd-shaped columnar body having lesser recessed portions 32 each straddling the other end face and the peripheral surface of the cylindrical body 21 between the circumferentially adjacent recessed portions 22, 22. Note that the lesser recessed portions 32 are of smaller recess than the recessed portions 22. The boundary line 34 between the other end face 23 and the recessed surface 33 of the lesser recessed portion 32 of the odd-shaped columnar body forming the the pin 3A is formed in a curve like an arc curved line approaching the central axis X from the peripheral surface of the cylindrical body 21. Also, the lesser recessed portions 32 are formed as hollows (depressions) continuous from the other end face 23 of the odd-shaped columnar body forming the pin 3A to the other end face 20 of the columnar body 2. And the cross-sectional shape of the hollows (cross-sectional shape perpendicular to the central axis X of the pin 3A) is the same at any point between the the other end face 23 of the pin 3A and the other end face 20 of the columnar body 2.

In the same way as in the first embodiment, the stud 1 for tires according to the third embodiment can not only realize weight reduction but also make the projected edge component H larger. Also, provided with the lesser recessed portions 32, the stud 1 for tires enables weight reduction of the pin 3A better than the first embodiment. Further, the number of the corners 30 formed by boundaries between a flat surface, a curved surface, and another curved surface can be increased, thereby enhancing the penetration force against the surface of ice.

### Fourth Embodiment

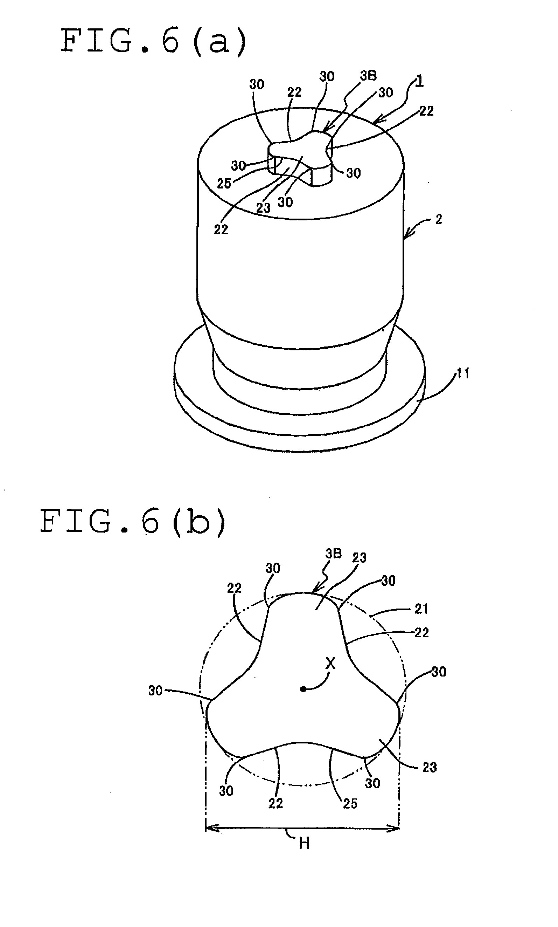

With reference to FIG. 6, a description will be given of a structure of a stud for tires according to a fourth embodiment, which is not according to the present invention, but is useful for understanding the present invention.

A stud 1 for tires may be one provided with a pin 3B as shown in FIG. 6.

That is, the stud 1 for tires may be provided with the pin 3B having three recessed portions 22. The three recessed portions 22 are disposed on the peripheral surface of the cylindrical body 21 at equal angular intervals, that is, 120 degrees apart from each other, along the circumference of the cylindrical body 21 with the central axis X thereof as the center. In other words, the pin 3B is shaped such that each time the stud 1 is turned 120 degrees, starting from the initial position, with the central axis X of the pin 3B as the center, the other end face 23 of the pin 3B assumes the same triangular-like shape.

In the same way as in the first embodiment, the stud 1 for tires according to the fourth embodiment can not only realize weight reduction but also make the projected edge component H larger. Moreover, provided with the corners 30, the stud 1 for tires of this embodiment enhances the penetration force against the surface of ice. Especially, the recessed portions 22, which can be made larger than those of the first embodiment, provide an advantage in weight reduction.

### Fifth Embodiment

The arrangement may be such that the stud 1 for tires has a pin 3A of the third embodiment and a columnar body 2A of the second embodiment. This embodiment is according to the present invention. Compared with the first embodiment, this embodiment can provide a stud 1 for tires featuring both weight reduction and even more enhanced clawing force.

### Sixth Embodiment

Furthermore, the arrangement may be such that the stud 1 for tires has a pin 3B of the fourth embodiment and a columnar body 2A of the second embodiment. This embodiment is not according to the present invention, but is useful for understanding the present invention. Compared with the fourth embodiment, this embodiment can provide a stud 1 for tires featuring both further weight reduction and even more enhanced clawing force.

It should be appreciated that, in the fifth embodiment or the sixth embodiment, the recessed portions 22 and the columnar body recessed portions 41 may be so arranged that the curved lines of the boundary lines 42 between the other end face 20 and the columnar body recessed portion 41 of the columnar body 2A and the curved lines of the corresponding boundary lines 25 between the other end face 23 and the recessed portion 22 of the pin 3A or pin 3B intersect their corresponding straight lines passing through the central axis X. Then the penetration force of the stud against the surface of ice can be enhanced by the synergistic effect of the corners 30 of the pin 3A or 3B and the corners 50 of the columnar body 2A.

It is to be noted that the other end face 23 of the pin may be formed in a curved surface. In this case, the stud for tires will have a pin having corners formed by the boundaries between three curved surfaces such that the penetration force against the surface of ice will be enhanced by the local edge pressures raised by the corners.

Also, the stud for tires may be one with a pin so formed that the boundary lines between the other end face 23 of the pin and the recessed portions 22 and the lesser recessed portions 32 are a plurality of straight lines (straight lines extending from the circumference of the other end face of the cylindrical body 21). In this case, the pin is so shaped as to have corners formed by the boundaries between the other end face (flat or curved surface) of the pin, a curved surface which is the peripheral surface of the pin (remaining peripheral surface of the cylindrical body 21), and a flat surface which is the dipping surface of the recessed portion (flat surface extending from the peripheral surface of the cylindrical body 21 toward the central axis X). Therefore, the corners are sharper than those of a rectangular cylinder formed by the boundaries between three flat surfaces, and consequently they raise local edge pressure, thereby enhancing the penetration force against the surface of ice.

Accordingly, it is to be noted that the recessed portions 22 and the lesser recessed portions 32 meant by the present invention are either recessed portions having a curved surface dipping from the peripheral surface of the cylindrical body 21 toward the central axis X or those having a plurality of flat surfaces extending from the peripheral surface of the cylindrical body 21 toward the central axis X.

Also, the number of the recessed portions 22 may be two. In this case, it is preferable that the recessed portions 22 are disposed at equal angular intervals, that is, 180 degrees apart from each other, along the circumference of the cylindrical body 21.

Also, in the foregoing embodiments, the pin has been described as one having recessed portions 22 continuous from the other end face 23 of an odd-shaped columnar body to the other end face 20 of a columnar body 2. Yet, it is not necessary that the recessed portions 22 are continuous all the way to the other end face 20 of the columnar body 2.

### Description of Reference Numerals

- 1: stud for tires
- 2: columnar body
- 3, 3A, 3B: pin
- 4: one end face of columnar body
- 5: tire
- 6: tread surface
- 7: bottomed hole
- 20: other end face of columnar body
- 21: cylindrical body
- 22: recessed portion
- 23: other end face of pin
- 25: boundary line
- 32: lesser recessed portion
- X: central axis

## Claims

1. A stud for tires comprising:
a columnar body (2) to be secured to a tread surface of a tire with one end side thereof in a direction along a central axis (X) thereof to be fitted into a bottomed hole formed in the tread surface of the tire; and
a pin (3) protruding from an other end of the columnar body (2) in the direction along the central axis (X) thereof,
wherein the pin (3) is shaped as an odd-shaped columnar body protruding from the other end face (20) of the columnar body (2) and having recessed portions (22) formed by removing portions straddling the other end face of a cylindrical body (21), the cylindrical body (21) protruding from the other end face (20) of the columnar body (2), and a peripheral surface of the cylindrical body (21) to extend in the direction along the central axis (X) of the columnar body (2), and wherein the pin (3) is provided with a plurality of recessed portions (22) and shaped as an odd-shaped columnar body having a lesser recessed portion (32) formed by removing a portion straddling the other end face and the peripheral surface of the cylindrical body (21) between the recessed portions (22) circumferentially adjacent to each other, the lesser recessed portions (32) being of smaller recess than the recessed portions (22).

2. The stud for tires according to claim 1, wherein a boundary line (25) between the other end face (23) and the recessed portion (22) of the pin (3) is formed in a curved line and a surface (24) of the recessed portion (22) is formed in a curved surface.

3. The stud for tires according to claim 1, wherein the stud has columnar body recessed portions (41) on the columnar body (2A), the columnar body recessed portions (41) straddling the other end face (20) and peripheral surface (2a) of the columnar body (2) and wherein the recessed portions (22) and the columnar body recessed portions (41) are so arranged that each boundary line (42) between the other end face (20) and the columnar body recessed portion (41) of the columnar body (2A) and each corresponding boundary line (25) between the other end face (23) and the recessed portion (22) of the pin (3) intersect a corresponding straight line passing through the central axis (X) of the columnar body (2A).

## Patentansprüche

1. Spike für Reifen, umfassend:
einen säulenförmigen Körper (2), der mit einem seiner Enden in einer Richtung entlang seiner Mittelachse (X) an einer Profiloberfläche eines Reifens zu befestigen ist, um in eine in der Profiloberfläche des Reifens gebildete Öffnung mit Boden eingepasst zu werden, und
einen Stift (3), der aus dem anderen Ende des säulenförmigen Körpers (2) in die Richtung entlang seiner Mittelachse (X) hervorsteht,
wobei der Stift (3) als unregelmäßig geformter säulenförmiger Körper geformt ist, der aus der anderen Endfläche (20) des säulenförmigen Körpers (2) hervorsteht und ausgesparte Abschnitte (22) aufweist, die durch Entfernen von Abschnitten gebildet sind, die die andere Endfläche eines zylindrischen Körpers (21) überspannen, wobei der zylindrische Körper (21) von der anderen Endfläche (20) des säulenförmigen Körpers (2) hervorsteht und sich eine Umfangsoberfläche des zylindrischen Körpers (21) in die Richtung entlang der Mittelachse (X) des säulenförmigen Körpers (2) erstreckt, und wobei der Stift (3) mit mehreren ausgesparten Abschnitten (22) versehen und als unregelmäßig geformter säulenförmiger Körper geformt ist, der einen weniger ausgesparten Abschnitt (32) aufweist, welcher durch Entfernen eines Abschnitts gebildet ist, der die andere Endfläche und die Umfangsoberfläche des zylindrischen Körpers (21) zwischen den in Umfangsrichtung zueinander benachbarten ausgesparten Abschnitten (22) überspannt, wobei die weniger ausgesparten Abschnitte (32) eine kleinere Aussparung aufweisen als die ausgesparten Abschnitte (22).

2. Spike für Reifen nach Anspruch 1, wobei eine Begrenzungslinie (25) zwischen der anderen Endfläche (23) und dem ausgesparten Abschnitt (22) des Stifts (3) in einer gekrümmten Linie gebildet ist und eine Oberfläche (24) des ausgesparten Abschnitts (22) in einer gekrümmten Oberfläche gebildet ist.

3. Spike für Reifen nach Anspruch 1, wobei der Spike ausgesparte Abschnitte (41) des säulenförmigen Körpers am säulenförmigen Körper (2A) aufweist, wobei die ausgesparten Abschnitte (41) des säulenförmigen Körpers die andere Endfläche (20) und die Umfangsoberfläche (2a) des säulenförmigen Körpers (2) überspannen und wobei die ausgesparten Abschnitte (22) und die ausgesparten Abschnitte (41) des säulenförmigen Körpers derart angeordnet sind, dass jede Begrenzungslinie (42) zwischen der anderen Endfläche (20) und dem ausgesparten Abschnitt (41) des säulenförmigen Körpers (2A) und jede entsprechende Begrenzungslinie (25) zwischen der anderen Endfläche (23) und dem ausgesparten Abschnitt (22) des Stifts (3) eine entsprechende Gerade durch die Mittelachse (X) des säulenförmigen Körpers (2A) schneidet.

## Revendications

1. Crampon pour pneus, comprenant :
un corps colonnaire (2) à fixer sur une surface de bande de roulement d'un pneu, avec un côté d'extrémité dudit corps dans une direction suivant un axe central (X) dudit corps destiné à être mis en place dans un trou, présentant un fond, formé dans la surface de bande de roulement du pneu ; et
un piton (3) faisant saillie à partir d'une autre extrémité du corps colonnaire (2) dans la direction suivant l'axe central (X) dudit corps,
dans lequel le piton (3) est formé en tant que corps colonnaire de forme particulière faisant saillie à partir de l'autre face d'extrémité (20) du corps colonnaire (2) et présentant des parties renfoncées (22) formées en retirant des parties chevauchant l'autre face d'extrémité d'un corps cylindrique (21), ledit corps cylindrique (21) faisant saillie à partir de l'autre face d'extrémité (20) du corps colonnaire (2), et une surface périphérique du corps cylindrique (21) pour s'étendre dans la direction suivant l'axe central (X) du corps colonnaire (2), et dans lequel le piton (3) est muni d'une pluralité de parties renfoncées (22) et est formé en tant que corps colonnaire de forme particulière présentant une partie moins renfoncée (32) formée en retirant une partie chevauchant l'autre face d'extrémité et la surface périphérique du corps cylindrique (21) entre les parties renfoncées (22) circonférentiellement adjacentes les unes aux autres, lesdites parties moins renfoncées (32) présentant un renfoncement inférieur aux parties renfoncées (22).

2. Crampon pour pneus selon la revendication 1, dans lequel une ligne de délimitation (25) entre l'autre face d'extrémité (23) et la partie renfoncée (22) du piton (3) est formée en une ligne courbe et une surface (24) de la partie renfoncée (22) est formée en une surface courbe.

3. Crampon pour pneus selon la revendication 1, dans lequel le crampon présente des parties renfoncées (41) de corps colonnaire sur le corps colonnaire (2A), lesdites parties renfoncées (41) de corps colonnaire chevauchant l'autre face d'extrémité (20) et la surface périphérique (2a) du corps colonnaire (2) et dans lequel les parties renfoncées (22) et les parties renfoncées (41) de corps colonnaire sont agencées de telle manière que chaque ligne de délimitation (42) entre l'autre face d'extrémité (20) et la partie renfoncée (41) de corps colonnaire du corps colonnaire (2A) et chaque ligne de délimitation (25) correspondante entre l'autre face d'extrémité (23) et la partie renfoncée (22) du piton (3) coupe une ligne droite correspondante passant par l'axe central (X) du corps colonnaire (2A).
